# EUROPÄISCHE PATENTSCHRIFT

(11) **EP 2 637 858 B1**
(45) Veröffentlichungstag und Bekanntmachung des Hinweises auf die Patenterteilung: **08.02.2017**
(21) Anmeldenummer: 11778925.5
(22) Anmeldetag: 07.11.2011
(51) Int. Cl.: B32B 3/12, B60R 21/00, B62D 25/00

(54) **WABENKERN, HERSTELLUNGSVERFAHREN FÜR EINEN WABENKERN SOWIE VERBUNDPLATTE MIT EINEM WABENKERN**
HONEYCOMB CORE, METHOD OF PRODUCING A HONEYCOMB CORE AND SANDWICH PANEL COMPRISING A HONEYCOMB CORE
ÂME ALVÉOLAIRE, PROCÉDÉ DE PRODUCTION D'UNE ÂME ALVÉOLAIRE, AINSI QUE PANNEAU COMPOSITE COMPRENANT UNE ÂME ALVÉOLAIRE

(30) Priorität: 09.11.2010 US 411615 P
(43) Veröffentlichungstag der Anmeldung: 18.09.2013
(73) Patentinhaber: Magna Steyr Fahrzeugtechnik AG & Co. KG, 8041 Graz (AT)
(72) Erfinder: DIETZ, Wolfgang, A-8081 Pirching (AT); KRAMMER, Christoph, A-8530 Deutschlandsberg (AT)
(74) Vertreter: Zangger, Bernd
(86) Internationale Anmeldenummer: PCT/EP2011/069554
(87) Internationale Veröffentlichungsnummer: WO 2012/062705

(56) Entgegenhaltungen:
- EP-A2- 0 798 107
- EP-A2- 1 889 713
- CN-A- 101 408 066
- DE-A1-102005 033 949
- DE-U1- 8 913 004
- US-A- 3 070 198

## Beschreibung

### TECHNISCHES GEBIET

Die Erfindung betrifft einen Wabenkern mit einer Gitterstruktur, die aus einer Vielzahl an Gitterelementen besteht, welche an Knotenstellen miteinander verbunden sind. Desweiteren betrifft die Erfindung ein Verfahren zur Herstellung eines solchen Wabenkerns sowie eine Verbundplatte, umfassend einen solchen Wabenkern.

### STAND DER TECHNIK

Wabenkerne und Verbundplatten der genannten Art sind prinzipiell bekannt. Traditionell werden solche Wabenkerne und Verbundplatten im Möbelbau eingesetzt, nach und nach hat diese Technik auch in anderen Bereichen Einzug gehalten, beispielsweise im Fahrzeugbau, Schiffs- und Flugzeugbau, beziehungsweise generell dort, wo eine hohe Bauteilsteifigkeit bei geringem Gewicht verlangt ist. Allgemein kann der Wabenkern aus beliebigem Material gefertigt sein. Recht häufig besteht er aus einem Verbundwerkstoff, bei dem ein Harz in eine Matrix eingelagert ist.

Beispielsweise offenbart die DE 10 2008 062 678 A1 dazu ein Verbundbauteil mit einer Wabenstruktur, welche aus wenigstens zwei miteinander verbundenen Lagen zusammengesetzt ist, wobei die wenigstens zwei Lagen der Wabenstruktur aus unterschiedlichen Werkstoffen gebildet sind.

Die EP 1 889 713 A2 offenbart eine Verbundstruktur umfassend einen ersten zellularen Kernabschnitt mit einer ersten Kante mit einer ersten Mehrzahl von Kantenzellwänden entlang der ersten Kante, einen zweiten zellularen Kernabschnitt mit einer zweiten Kante mit einer zweiten Mehrzahl von Kantenzellwänden entlang der zweiten Kante, wobei zumindest ein erster Teil von der ersten Vielzahl von Kantenzellenwänden mechanisch mit mindestens einem zweiten Teil der zweiten Mehrzahl von Kantenzellwänden verriegelt ist, wodurch eine Verbindung dazwischen gebildet wird.

Aus der EP 0 798 107 A2 ist eine Plattenstruktur bekannt, wobei die Platte umfasst: zumindest zwei Abschnitte zellulären Kernmaterials, welche durch eine Lücke getrennt sind, eine perforierte Außenhaut, wobei die perforierte Außenhaut mit kleinen Löchern perforiert ist, wobei die perforierte Außenhaut durch ein Schichtklebemittel haftend mit den Außenseiten der Abschnitte aus zellulärem Kernmaterialverbunden ist, eine ausgehärtete eingeschlossene schäumende Klebemitteleinheit.

Die US 3 070 198 A offenbart eine Wabenstruktur mit einer Vielzahl von Zellen, wobei primäre Zellen in Linien angeordnet sind, und zwischen den primären Zellen zur Verbindung Linien von sekundären Zellen angeordnet sind.

Die DE 89 13 004 U1 lehrt eine Verbundplatte mit einer Ausnehmungen aufweisenden Kernschicht, die von einer rückseitigen und einer sichtseitigen Deckschicht abgedeckt ist, wobei die Kernschicht wabenförmig ausgebildet ist und durchgehende, senkrecht zur Plattenebene verlaufende Hohlräume aufweist.

DE 10 2005 033949 A1 offenbart eine Motorhaube für Kraftfahrzeuge, bestehend aus einer Außenhaut, inneren Decklagen und dazwischen Kernteilen aus Hartschaum oder Waben, wobei die Kernteile Zonen verschiedener Härte und/oder Dicke bilden und dass quer über die ganze Breite der Motorhaube eine Sollknickzone vorgesehen ist, die durch Schwächung der Struktur erzielt ist.

Weiterhin offenbart die DE 10 2005 033 949 A1 eine Motorhaube aus einer Verbundplatte mit innenliegenden Kernteilen aus Hartschaum oder Waben. Zum Schutz von Fußgängern bilden die Kernteile Zonen verschiedener Härte und/oder Dicke. Zudem ist quer über die ganze Breite der Motorhaube eine Sollknickzone vorgesehen, durch die eine Schwächung der Struktur erzielt wird. Die Sollknickzone ist die Grenze zwischen einer vorderen Zone mit weicheren Kernteilen und einer hinteren Zone mit Kernteilen höherer Festigkeit.

Die DE 101 36 898 A1 offenbart zudem eine Motorhaube eines Kraftfahrzeugs, welche Verformungselemente aus mehreren Teilstücken umfasst, die über Versagensstellen miteinander verbunden sind. Bei einer dynamischen Belastung, wie sie bei einem Kopfaufprall auftritt, brechen die Versagensstellen, so dass die einzelnen Teilstücke kraftfrei gegeneinander verschoben werden.

Schließlich offenbart die DE 102 42 185 B3 eine Kunststoffplatte aus einem Sandwichmaterial, welche an verschiedenen Stellen mit nichthaftenden Einlegern hinterlegt wird. Dadurch wird die Haftung zwischen Wabenkern oder Schaumschicht und mindestens einer der Deckschichten oder Verstärkungsschichten unterbunden, was eine Schwachstelle und somit eine Sollknickstelle im Crashfall zur Folge hat.

Problematisch an den Wabenkernen beziehungsweise Verbundplatten bekannter Bauart ist deren vergleichsweise aufwändige Herstellung.

### OFFENBARUNG DER ERFINDUNG

Aufgabe der Erfindung ist es daher, einen verbesserten Wabenkern beziehungsweise eine verbesserte Verbundplatte mit einem solchen Wabenkern anzugeben. Insbesondere soll eine Möglichkeit angegeben werden, die Steifigkeit eines solchen Wabenkerns beziehungsweise einer solchen Verbundplatte zu steuern.

Die Aufgabe der Erfindung wird mit einem Wabenkern der eingangs genannten Art gelöst, bei dem an mehreren Stellen ein Gitterelement ein benachbartes Gitterelement nur lose berührt oder ein Gitterelement unterbrochen ist, wobei mehrere lose Kontaktstellen beziehungsweise Unterbrechungen zweidimensional über die Gitterstruktur unregelmäßig verteilt sind, um die Steifigkeit des Wabenkerns einzustellen, so dass unterschiedlich steife Zonen auf dem Wabenkern gebildet werden.

Weiterhin wird die Aufgabe der Erfindung durch eine Verbundplatte gelöst, welche einen Wabenkern der genannten Art und damit verbundene Deckschichten umfasst.

Erfindungsgemäß wird dadurch erreicht, dass sich die Steifigkeit eines Wabenkerns respektive einer Verbundplatte, welche einen solchen Wabenkern aufweist, sehr gut einstellen lässt. Insbesondere kann ein Wabenkern / eine Verbundplatte hergestellt werden, welche in verschiedenen Bereichen unterschiedliche Steifigkeiten aufweist.

Der Vorteil der Erfindung tritt beispielsweise dann besonders hervor, wenn ein Wabenkern oder eine Verbundplatte der genannten Art im Fahrzeugbau verwendet wird, etwa als Motorhaube oder als Interieur-Bauteil. In beiden Fällen ist es wichtig, dass sich Personen bei einem Aufprall auf die genannten Bauteile nicht oder nicht schwer verletzen. Mit Hilfe des erfindungsgemäßen Wabenkerns ist es nun möglich, eine Motorhaube eines Fahrzeugs auf einfache Weise unterschiedlich steif zu gestalten. So können verschiedene Zonen gebildet werden, an denen ein Fußgänger aller Wahrscheinlichkeit mit den Beinen, mit dem Rumpf oder mit dem Kopf auf die Motorhaube aufschlägt, wenn er von einem Fahrzeug angefahren wird. Dasselbe gilt für ein Interieur-Bauteil, beispielsweise ein Armaturenbrett. Auch dort können verschieden steife Zonen auf einfache Weise gebildet werden.

Erfindungsgemäß werden mehrere lose Kontaktstellen beziehungsweise Unterbrechungen zweidimensional über die Gitterstruktur verteilt. Auf diese Weise können unterschiedlich steife Zonen auf dem Wabenkern respektive auf der Verbundplatte gebildet werden. Beispielsweise kann eine Motorhaube, welche einen solchen Wabenkern umfasst, dort besonders weich ausgeführt werden, wo die Wahrscheinlichkeit besonders hoch ist, dass ein angefahrener Fußgänger mit dem Kopf aufschlägt.

Beispielsweise kann ein leicht herzustellender Wabenkern beziehungsweise dessen Gitterstruktur polygonförmige Waben umfassen, insbesondere hexagonale Waben. In einer weiteren leicht herzustellenden Variante eines Wabenkerns umfasst die Gitterstruktur gewellte Streifen, insbesondere gewellte Streifen mit dazwischen angeordneten geraden Streifen. In einer vorteilhaften Ausführungsform der Erfindung besteht der Wabenkern nur aus (solchen) Gitterelementen.

Definitionsgemäß bilden im Rahmen der Erfindung mehrere "Gitterelemente" eine "Gitterstruktur" geometrischen Sinn, beziehungsweise den "Wabenkern" im körperlichen Sinn.

In einer speziellen Ausgestaltung bestehen die Gitterelemente aus einer Matrix mit einem darin eingebetteten und/oder darauf aufgebrachten Harz, somit aus einem Verbundwerkstoff. "Harz" gilt in diesem Zusammenhang als Sammelbegriff für feste bis flüssige organische Stoffe. Insbesondere kann die Matrix aus saugfähigem Material bestehen, beispielsweise aus Karton oder aus Fasergeweben, Fasergeflechten oder Fasergestricken aus Glasfasern, Kevlarfasern, Aramidfasern, Carbonfasern oder Gemischen derselben.

In einer besonders vorteilhaften Ausgestaltung der Erfindung wird die Matrix planmäßig in inhomogener Weise mit dem Harz getränkt. Auf diese Weise steht ein weiterer Einflussparameter zur Verfügung, um die Steifigkeit eines Wabenkerns respektive einer Verbundplatte einzustellen.

In einem besonderen Verfahren zur Herstellung eines Wabenkerns mit einer Gitterstruktur, welche eine harzgetränkte Matrix umfasst, wird die Matrix dazu:
a) nur bereichsweise und/oder
b) bereichsweise unterschiedlich lang und/oder
c) bereichsweise unterschiedlich stark
mit einem Harz oder mehreren Harzen in Kontakt gebracht.

Weitere vorteilhafte Ausgestaltungen und Weiterbildungen der Erfindung ergeben sich nun aus den Unteransprüchen sowie aus der Beschreibung in Zusammenschau mit den Figuren.

Besonders vorteilhaft ist es, wenn der Wabenkern einstückig ausgebildet ist. Auf diese Weise werden die Handhabung des Wabenkerns und auch die Herstellung einer Verbundplatte gegenüber Verfahren, bei denen mehrere Wabenkerne in einer Verbundplatte verbaut sind, wesentlich vereinfacht.

Vorteilhaft ist es, wenn der Wabenkern wenigstens eine Knotenstelle umfasst, an der alle Gitterelemente, welche diese Knotenstelle bilden, einander nur lose berühren oder ein Spalt zwischen denselben vorgesehen ist. Auf diese Weise wird der Wabenkern an der betreffenden Stelle besonders weich.

Vorteilhaft ist es weiterhin, wenn zumindest zwischen zwei benachbarten Knotenstellen parallel verlaufende Gitterelemente einander nur lose berühren oder ein Spalt zwischen denselben vorgesehen ist. Dadurch resultiert ein weiterer Parameter zur Steuerung der Steifigkeit eines Wabenkerns, bei dem Gitterelemente gewöhnlich flächig miteinander verklebt werden. Dies kann zum Beispiel dann der Fall sein. wenn der Wabenkern aus einzelnen Waben (beispielsweise hexagonale Waben) aufgebaut ist, welche miteinander verklebt werden. Werden einzelne Gitterelemente benachbarter Waben nicht miteinander verklebt, so entsteht eine planmäßige Schwachstelle innerhalbe der Gitterstruktur.

Vorteilhaft ist es, wenn zumindest eine lose Kontaktstelle beziehungsweise ein Spalt innerhalb der Gitterstruktur angeordnet ist. Dadurch kann der Wabenkern auf einfache Weise manipuliert werden, da am Rand keine losen Gitterelemente entstehen, welche sich verbiegen oder abreißen könnten.

Günstig ist es, wenn die Matrix aus einem im Wesentlichen homogenen Werkstoff besteht. Dadurch kann die Matrix auf einfache Weise hergestellt werden. Die Inhomogenität im Wabenkern wird dann vorwiegend durch die unterschiedliche Tränkung mit einem Harz bewerkstelligt. "Im Wesentlichen" bedeutet in diesem Zusammenhang, dass die Matrix zwar aus verschiedenen Werkstoffen hergestellt werden kann, beispielsweise aus Fasergemischen, die Eigenschaften der Matrix sich in den verschieden getränkten Bereichen aber nicht grundsätzlich voneinander unterscheiden beziehungsweise nicht von einer unterschiedlichen Tränkung abhängen.

Vorteilhaft ist es, wenn die Matrix nur bereichsweise mit dem Harz getränkt ist. Dadurch können unterschiedlich steife Bereiche des Wabenkerns besonders einfach hergestellt werden.

Vorteilhaft ist es auch, wenn die Matrix unterschiedlich stark mit dem Harz getränkt ist. Auf diese Weise kann eine Vielzahl an Steifigkeitsgraden der unterschiedlich getränkten Bereiche erzielt werden. Darüber hinaus kann die Steifigkeit des Wabenkerns kontinuierlich über den Wabenkern variiert werden.

Besonders vorteilhaft ist es, wenn die Matrix mit unterschiedlichen Harzen getränkt ist. Auf diese Weise kann ebenfalls eine Vielzahl an Steifigkeitsgraden der unterschiedlich getränkten Bereiche erzielt werden, beziehungsweise können auch anderer Eigenschaften als die Steifigkeit variiert werden. Beispielsweise kann ein mit einem ersten Harz getränkter Bereich wasserabweisend sein, wohingegen ein mit einem zweiten Harz getränkter Bereich nicht wasserabweisend ist.

Besonders vorteilhaft ist es, wenn die Inhomogenität zweidimensional über die Gitterstruktur verteilt ist. Auf diese Weise können unterschiedlich steife Zonen auf dem Wabenkern respektive auf der Verbundplatte gebildet werden. Beispielsweise kann eine Motorhaube, welche einen solchen Wabenkern umfasst, dort besonders weich ausgeführt werden, wo die Wahrscheinlichkeit besonders hoch ist, dass ein angefahrener Fußgänger mit dem Kopf aufschlägt.

Besonders vorteilhaft ist es auch, wenn die Inhomogenität über dessen Höhe verteilt ist. Auf diese Weise kann beispielsweise ein progressives oder degressives Verhalten des Wabenkerns gegenüber einem in den Wabenkern oder in eine Verbundplatte mit einem solchen Wabenkern eindringenden Körper eingestellt werden. Beispielsweise kann der Wabenkern in Richtung des eindringenden Körpers gesehen immer stärker getränkt sein. Somit wird dem eindringenden Körper ein immer größer werdender Widerstand entgegengesetzt (progressives Verhalten). Desgleichen kann der Wabenkern in Richtung des eindringenden Körpers gesehen immer schwächer getränkt sein. Somit wird dem eindringenden Körper ein immer kleiner werdender Widerstand entgegengesetzt (degressives Verhalten).

Ein vorteilhaftes Verfahren zur Herstellung eines Wabenkerns ist gegeben, wenn die Matrix in das zumindest eine Harz getaucht wird. Dadurch lässt die Matrix auf einfache Weise mit Harz tränken. Durch teilweises Eintauchen kann der Wabenkern zudem bereichsweise mit Harz getränkt werden. Weiterhin kann die Bewegung beim Eintauchen in das Harz oder beim Herausziehen aus dem Harz dazu genützt werden, den Wabenkern bereichsweise unterschiedlich lange mit dem Harz in Kontakt zu bringen. In Bereichen, welche lange mit dem Harz in Kontakt sind, lagert sich das Harz vermehrt ab, in Bereichen, welche nur kurz mit dem Harz in Kontakt sind, dementsprechend weniger. Auf diese Weise können vergleichsweise komplexe Profile der Intensität, in welcher sich das Harz in der Matrix ablagert, realisiert werden. Die erwähnte Bewegung kann stetig oder unstetig sowie mit konstanter oder variierender Geschwindigkeit ausgeführt werden. Selbstverständlich kann der Tauchvorgang mit verschiedenen Harzen wiederholt werden, sodass verschiedene Bereiche hintereinander in unterschiedliche Harze getaucht werden. Die erwähnten Bereiche können sich dabei auch überlappen.

Ein vorteilhaftes Verfahren ist schließlich gegeben, wenn die Matrix mit dem zumindest einen Harz besprüht wird. Durch Variation der Dauer und/oder der Intensität, mit denen verschiedene Bereiche des Wabenkerns mit einem Harz besprüht werden, kann ebenfalls eine inhomogene Tränkung der Matrix erzielt werden. Insbesondere können verschiedene Bereiche hintereinander oder auch gleichzeitig mit unterschiedlichen Harzen besprüht werden.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: einen Wabenkern mit polygonförmigen Waben in Schrägansicht;
- Figur 2: eine Verbundplatte mit einem solchen Wabenkern im Schnitt;
- Figur 3: einen Wabenkern der hochkant in einen mit Harz gefüllten Behälter getaucht wird;
- Figur 4: einen bereichsweise mit Harz getränkten Wabenkern;
- Figur 5: einen Verbundplatte, bei der die Tränkung des Wabenkerns mit einem Harz über die Fläche verteilt inhomogen ist;
- Figur 6: einen Wabenkern der liegend in einen mit Harz gefüllten Behälter getaucht wird;
- Figur 7: einen Verbundplatte, bei der die Tränkung des Wabenkerns mit einem Harz über dessen Höhe verteilt inhomogen ist;
- Figur 8: einen Wabenkern, der mit Harz besprüht wird;
- Figur 9: einen Wabenkern mit gewellten Streifen;
- Figur 10: einen Wabenkern mit gewellten Streifen und dazwischen angeordneten geraden Streifen;
- Figur 11: einen Ausschnitt aus einem Wabenkern, bei dem ein Gitterelement die benachbarten Gitterelemente an einer Kontaktstelle nur lose berührt;
- Figur 12: wie Figur 11, nur mit einem Spalt;
- Figur 13: einen Ausschnitt aus einem Wabenkern, bei dem alle Gitterelemente eines Knotens einander nur lose berühren;
- Figur 14: wie Figur 13, nur mit einem Spalt;
- Figur 15: einen Ausschnitt aus einem Wabenkern mit einem unterbrochenen Gitterelement;
- Figur 16: einen Ausschnitt aus einem Wabenkern, bei dem zwischen zwei benachbarten Knotenstellen parallel verlaufende Gitterelemente einander nur lose berühren und
- Figur 17: einen Wabenkern mit über die Fläche verteilten Unterbrechungen.

### DETAILIERTE BESCHREIBUNG DER ERFINDUNG

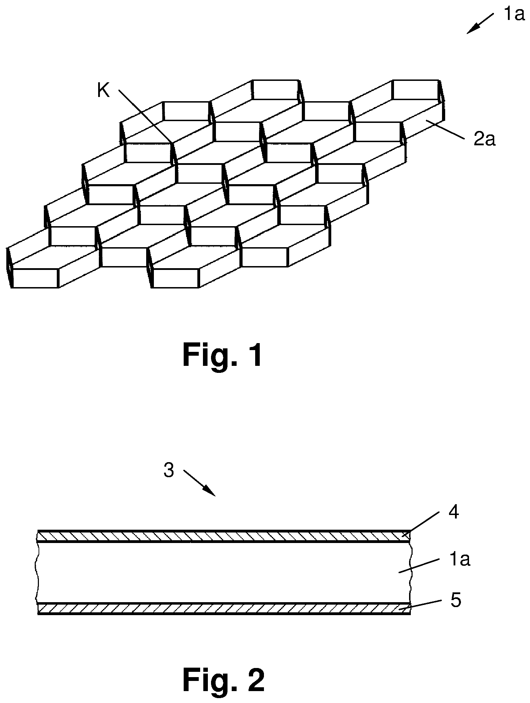

Fig. 1 zeigt einen Wabenkern 1a mit einer Gitterstruktur, die aus einer Vielzahl an Gitterelementen 2a besteht, welche an Knotenstellen K miteinander verbunden sind. In diesem Beispiel umfasst der Wabenkern 1a beziehungsweise dessen Gitterstruktur polygonförmige Waben, konkret hexagonale Waben.

Fig. 2 zeigt eine Verbundplatte 3, umfassend den Wabenkern 1a und damit verbundene Deckschichten 4 und 5.

Um die Steifigkeit des Wabenkerns 1a beziehungsweise der Verbundplatte 3 zu steuern, wird eine harzgetränkte Matrix, welche Bestandteil der Gitterstruktur ist in inhomogener Weise mit dem Harz getränkt. Wird der Wabenkern 1a respektive die Verbundplatte 3, welche den Wabenkern 1a umfasst, einer Belastung ausgesetzt, so führt diese erwähnte Inhomogenität dazu, dass sich der Wabenkern 1a / die Verbundplatte 3 unterschiedlich verformt.

Dazu kann die Matrix:
a) nur bereichsweise und/oder
b) bereichsweise unterschiedlich lang und/oder
c) bereichsweise unterschiedlich stark mit einem Harz oder mehreren Harzen in Kontakt gebracht werden.

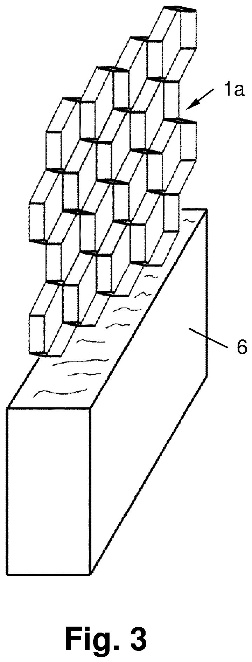

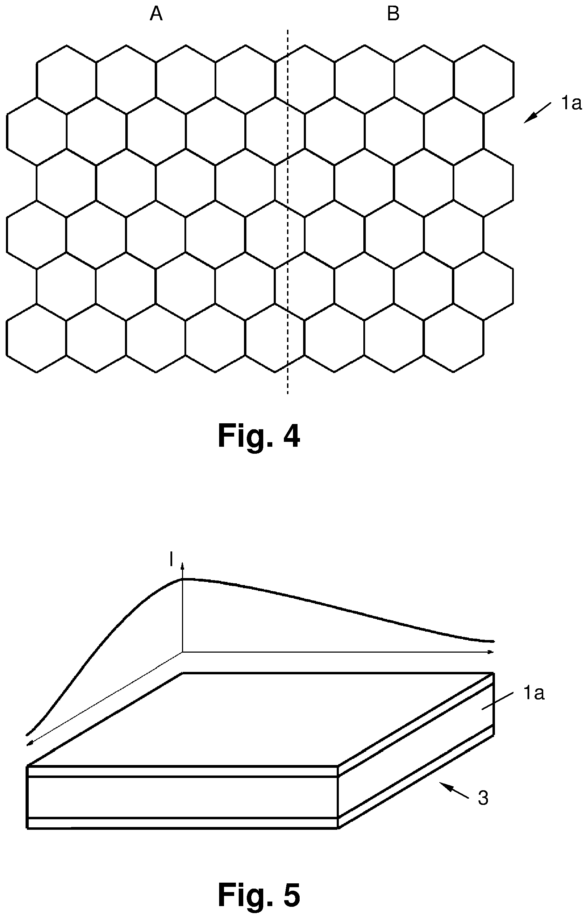

Beispielsweise kann die Matrix dazu wie in Fig. 3 dargestellt in einen mit Harz gefüllten Behälter 6 getaucht werden. Wird die Matrix nur teilweise eingetaucht, so wird die Matrix folglich nur bereichsweise mit Harz getränkt. Auf diese Weise kann ein Wabenkern hergestellt werden, welcher beispielsweise wie in Fig. 4 dargestellt in einem Bereich A mit Harz getränkt ist, in einem Bereich B dagegen nicht getränkt ist. Denkbar wäre auch, den Bereich B in einem weiteren Schritt mit einem anderen Harz zu tränken. Selbstverständlich können sich Bereiche, welche mit unterschiedlichen Harzen in Kontakt gebracht wurden, auch überschneiden.

Weiterhin kann eine Bewegung der Matrix während des Tauchvorgangs dazu genützt werden, um diese in inhomogener Weise zu tränken. Beispielsweise kann die Matrix vollständig in das Harz eingetaucht und mit unterschiedlichen Geschwindigkeiten sowie kontinuierlich oder diskontinuierlich wieder aus diesem herausgezogen werden. Selbstverständlich kann auch die Bewegung beim Eintauchen in den Behälter 6 variiert werden. Auf diese Weise wird die Matrix bereichsweise unterschiedlich lang mit dem Harz in Kontakt gebracht, sodass sich dieses unterschiedlich in der Matrix ablagert. Fig. 5 zeigt ein Beispiel, wie die Intensität I des Harzes über dem Wabenkern 1a respektive der Verbundplatte 3 verteilt sein kann. Wie aus der Fig. 5 leicht ersichtlich ist, ist die Inhomogenität zweidimensional über die Gitterstruktur verteilt. Selbstverständlich kann dieses Verfahren auch mit unterschiedlichen Harzen angewandt werden.

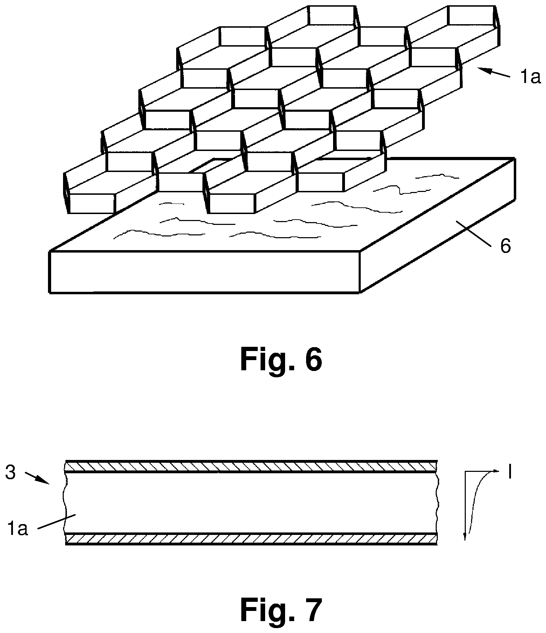

Fig. 6 zeigt ein weiteres Verfahren, bei dem die Matrix liegend in einen mit Harz gefüllten Behälter 6 getaucht wird. Analog zu dem zu den Figuren 4 und 5 beschriebenen Verfahren kann die Matrix nur teilweise eingetaucht werden, um die Matrix nur bereichsweise zu tränken. Desgleichen kann eine Bewegung der Matrix während des Tauchvorgangs variiert werden. Auf diese Weise wird die Matrix wiederum bereichsweise unterschiedlich lang mit dem Harz in Kontakt gebracht, sodass sich dieses unterschiedlich in der Matrix ablagert. Fig. 7 zeigt ein Beispiel, wie die Intensität I des Harzes über dem Wabenkern 1a respektive der Verbundplatte 3 verteilt sein kann. Wie aus der Fig. 7 leicht ersichtlich ist, ist die Inhomogenität über die Höhe des Wabenkerns 1a verteilt.

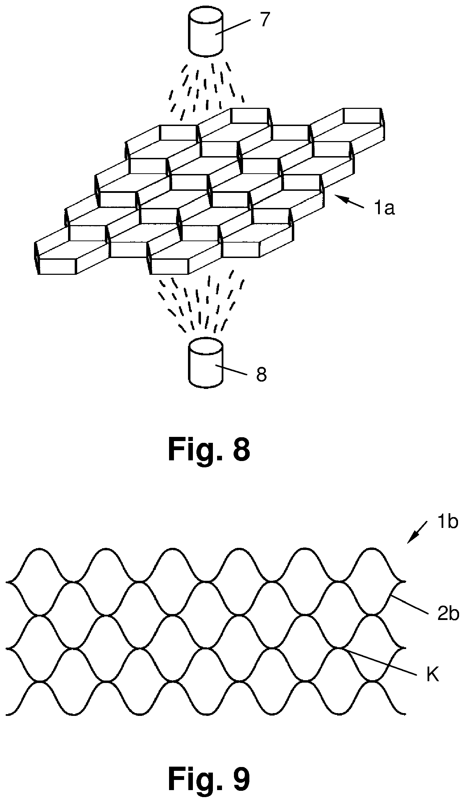

Fig. 8 zeigt ein weiteres Verfahren, bei dem die Matrix durch zwei Sprühköpfe 7 und 8 mit Harz besprüht werden. Auf diese Weise wird die Matrix bereichsweise unterschiedlich stark mit einem Harz in Kontakt gebracht. Zum Beispiel lagert sich das Harz in den Randbereichen der Matrix, welche den Sprühköpfen 7 und 8 zugewandt sind, stärker ab als in der Mitte. Denkbar ist natürlich auch, dass der Sprühkopf 7 ein anderes Harz aufträgt als der Sprühkopf 8. Durch horizontales Bewegen der Matrix, kann eine inhomogene Tränkung auch über die Fläche des Wabenkerns 1a gesteuert werden.

An dieser Stelle wird angemerkt dass die oben angeführten Varianten beliebig untereinander kombiniert werden können. Beispielsweise kann eine Matrix in ein Harz getaucht und mit einem anderen besprüht werden.

Die obigen Beispiele wurden anhand eines Wabenkerns 1a mit hexagonalen Waben erläutert. Deren Anwendung ist natürlich keinesfalls zwingend. Möglich ist natürlich auch, polygonförmige Waben mit einer anderen Anzahl an Ecken zu verwenden. Insbesondere ist es auch möglich, unterschiedliche Vielecke miteinander zu kombinieren, beispielsweise Achtecke mit Vierecken.

Fig. 9 zeigt eine weitere Variante eines Wabenkerns 1b, bei der die Gitterstruktur gewellte Streifen umfasst. Zar werden bei der Herstellung einer solchen Struktur üblicherweise einzelne gewellte Streifen miteinander verbunden, geometrisch kann aber auch diese Gitterstruktur so aufgefasst werden, dass sie aus einer Vielzahl an Gitterelementen 2b besteht, welche an Knotenstellen K miteinander verbunden sind.

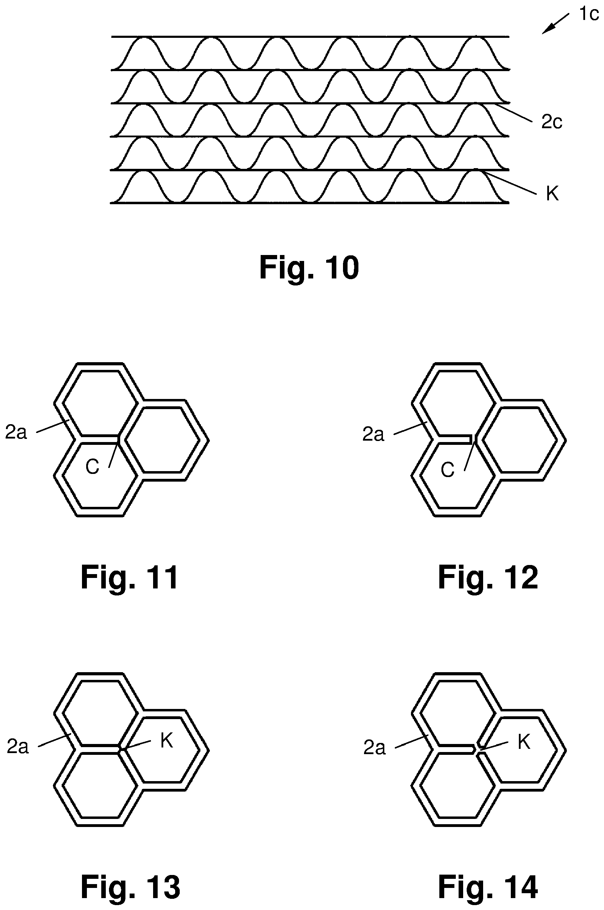

Fig. 10 zeigt einen Wabenkern 1c mit einer Gitterstruktur, welche gewellte Streifen mit dazwischen angeordneten geraden Streifen umfasst. Auch diese Gitterstruktur kann so aufgefasst werden, dass sie aus einer Vielzahl an Gitterelementen 2a besteht, welche an Knotenstellen K miteinander verbunden sind.

Prinzipiell können die Deckschichten 4 und 5 bei der Herstellung einer Verbundplatte 3 ebenfalls in inhomogener Weise auf einen Wabenkern 1a..1c aufgebracht werden, beispielsweise durch unterschiedliche Verteilung eines dafür vorgesehenen Klebstoffs. Durch die inhomogene Tränkung des Wabenkerns 1a..1c kann dies aber in den meisten Fällen entfallen, sodass die Herstellung einer Verbundplatte 3 vereinfacht wird. Vorzugsweise besteht die Matrix aus einem im Wesentlichen homogenen Werkstoff, wodurch auch diese auf einfache Weise hergestellt werden kann.

Um die Steifigkeit eines Wabenkerns 1a..1c beziehungsweise einer Verbundplatte 3 zu steuern, kann zusätzlich oder alternativ zur inhomogenen Tränkung der Gitterstruktur mit einem Harz auch vorgesehen sein, dass zumindest ein Gitterelement ein benachbartes Gitterelement nur lose berührt oder dass ein Spalt zwischen denselben vorgesehen ist oder dass ein Gitterelement unterbrochen ist. Das heißt, dass die genannten Gitterelemente untereinander nicht verbunden sind. Wird der Wabenkern 1a respektive die Verbundplatte 3, welche den Wabenkern 1a umfasst, einer Belastung in einer Richtung ausgesetzt, welche in der Zeichenebene der Figur 4 liegt, so führen diese nicht verbundenen Gitterelemente dazu, dass der Wabenkern 1a / die Verbundplatte 3 an dieser Stelle besonders weich ist. Die Steifigkeit des der Wabenkerns 1a / die Verbundplatte 3 kann auf diese Weise gut gesteuert werden. Wird der Wabenkern 1a / die Verbundplatte 3 normal zur genannten Zeichenebene belastet, so unterscheidet sich die Steifigkeit derselben nicht oder nur geringfügig von der Steifigkeit eines Wabenkerns / einer Verbundplatte unterscheidet, welche keine solche Unterbrechungen aufweist.

Fig. 11 zeigt dazu einen Ausschnitt aus einem Wabenkern mit hexagonalen Waben, bei dem ein Gitterelement 2a die benachbarten Gitterelemente 2a an der Kontaktstelle C nur lose berührt. In Fig. 12 ist darüber hinaus ein Spalt an der Stelle C ausgebildet.

Fig. 13 zeigt einen Ausschnitt aus einem weiteren Wabenkern, welcher eine Knotenstelle K aufweist, an der alle Gitterelemente 2a, welche diese Knotenstelle K bilden, einander nur lose berühren. In Fig. 14 ist darüber hinaus ein Spalt zwischen denselben vorgesehen.

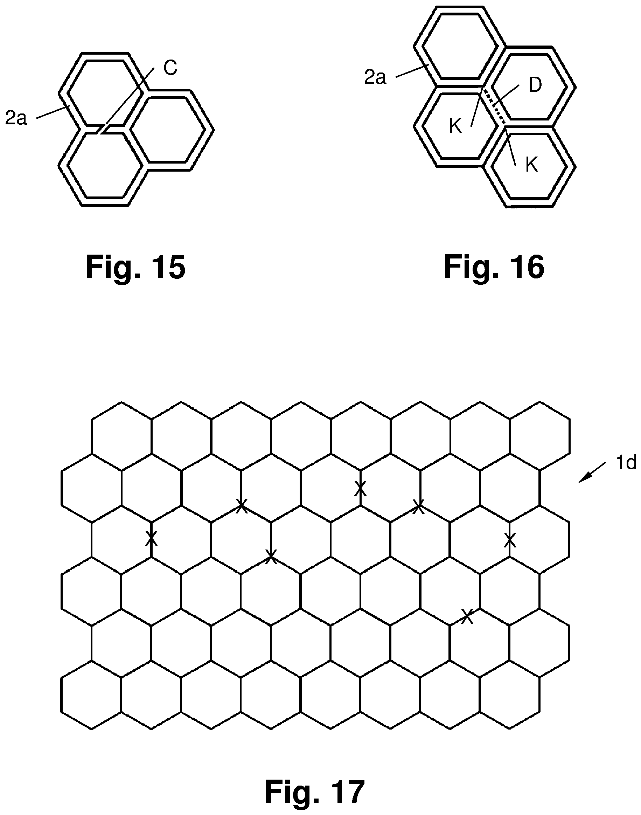

Fig. 15. zeigt einen Ausschnitt aus einem Wabenkern, bei dem ein Gitterelement 2a an der Stelle C unterbrochen ist. Zusätzlich sind die Enden des betreffenden Gitterelements 2a abgeschrägt, sodass sie bei Druckbelastung leichter aneinander vorbei gleiten können. Dies ist aber nicht zwingend der Fall, die Enden können auch gerade ausgebildet sein. Umgekehrt können auch die in den Figuren 11 bis 14 dargestellten Unterbrechungen abgeschrägt sein.

Fig. 16. zeigt einen Ausschnitt aus einem Wabenkern, bei dem zwischen zwei benachbarten Knotenstellen parallel verlaufende Gitterelemente 2a einander nur lose berühren. Dies ist bei der Kontaktstelle D (mit punktierter Linie dargestellt) der Fall. Alternativ kann auch ein Spalt an der Stelle D vorgesehen sein.

Fig. 17 zeigt ein Beispiel, wie die mit einem "X" markierten Unterbrechungen zweidimensional über die Gitterstruktur eines Wabenkerns 1d verteilt sein können. In der Fig. 17. sind die Unterbrechungen X unregelmäßig verteilt, selbstverständlich können diese aber auch je nach Anwendungsfall regelmäßig verteilt sein. In der Fig. 17 sind die Unterbrechungen X desweiteren innerhalb der Gitterstruktur angeordnet, sodass am Rand der Gitterstruktur keine losen Gitterelemente 2a entstehen. Aus der Fig. 17 ist auch ersichtlich, dass der Wabenkern 1d einstückig ausgebildet ist. Auf diese Weise ist dessen Manipulation, beziehungsweise auch die Herstellung der Verbundplatte 3 besonders einfach.

Die obigen Beispiele wurden anhand eines Wabenkerns 1a mit hexagonalen Waben erläutert. Deren Anwendung ist natürlich keinesfalls zwingend. Möglich ist natürlich auch, polygonförmige Waben mit einer anderen Anzahl an Ecken zu verwenden. Schließlich können auch Gitterstrukturen mit gewellten Streifen (Fig. 9) oder mit gewellte Streifen mit dazwischen angeordneten geraden Streifen (Fig. 10) solche Unterbrechungen aufweisen. Beispielsweise kann eine solche dadurch hergestellt werden, dass an den betreffenden Knotenstellen K beim Verkleben der Streifen kein Kleber aufgetragen wird. In diesem Fall sind jeweils zwei Gitterelemente 2b, 2c der vier an diese Knotenstelle K grenzenden Gitterelemente 2b, 2c untereinander verbunden.

Die in den Figuren gezeigten Maßnahmen können auf beliebige Art und Weise kombiniert werden. Beispielsweise kann der Wabenkern 1d aus der Fig. 17 so mit Harz getränkt werden wie der Wabenkern 1a aus der Fig. 4. Oder ein Wabenkern wie in Fig. 14 dargestellt wird wie in Fig. 8 dargestellt mit Harz besprüht. Der Fachmann kann die offenbarte Lehre ohne Mühe auf weitere Beispiele anwenden.

Ein Wabenkern 1a..1d oder eine Verbundplatte 3 kann beispielsweise im Fahrzeugbau verwendet werden, etwa als Motorhaube oder als Interieur-Bauteil. In beiden Fällen ist es wichtig, dass sich Personen bei einem Aufprall auf die genannten Bauteile nicht oder nicht schwer verletzen. Die Maßnahmen zur Steuerung der Festigkeit eines Wabenkerns 1a..1d bietet nun die Möglichkeit, eine Motorhaube eines Fahrzeugs auf einfache Weise unterschiedlich steif zu gestalten. So können verschiedene Zonen gebildet werden, an denen ein Fußgänger aller Wahrscheinlichkeit mit den Beinen, mit dem Rumpf oder mit dem Kopf auf die Motorhaube aufschlägt, wenn er von einem Fahrzeug angefahren wird. Dasselbe gilt für ein Interieur-Bauteil, beispielsweise ein Armaturenbrett. Auch dort können verschieden steife Zonen auf einfache Weise gebildet werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen.

## Patentansprüche

1. Wabenkern (1a..1d) mit einer Gitterstruktur, die aus einer Vielzahl an Gitterelementen (2a..2c) besteht, welche an Knotenstellen (K) miteinander verbunden sind, **dadurch gekennzeichnet, dass** an mehreren Stellen ein Gitterelement (2a..2c) ein benachbartes Gitterelement (2a..2c) nur lose berührt oder ein Gitterelement (2a..2c) unterbrochen ist, wobei mehrere lose Kontaktstellen beziehungsweise Unterbrechungen zweidimensional über die Gitterstruktur unregelmäßig verteilt sind, um die Steifigkeit des Wabenkerns einzustellen, so dass unterschiedlich steife Zonen auf dem Wabenkern gebildet werden.

2. Wabenkern (1a..1d) nach Anspruch 1, **dadurch gekennzeichnet, dass** dieser einstückig ausgebildet ist.

3. Wabenkern (1a..1d) nach Anspruch 1 oder 2, **gekennzeichnet durch** wenigstens eine Knotenstelle (K), an der alle Gitterelemente (2a..2c), welche diese Knotenstelle (K) bilden, einander nur lose berühren oder ein Spalt zwischen denselben vorgesehen ist.

4. Wabenkern (1a..1d) nach einem der Ansprüche 1 bis 3, **dadurch gekennzeichnet, dass** zumindest zwischen zwei benachbarten Knotenstellen (K) parallel verlaufende Gitterelemente (2a..2c) einander nur lose berühren oder ein Spalt zwischen denselben vorgesehen ist.

5. Wabenkern (1a..1d) nach einem der Ansprüche 1 bis 4, **dadurch gekennzeichnet, dass** zumindest eine lose Kontaktstelle beziehungsweise Spalte innerhalb der Gitterstruktur angeordnet ist.

6. Wabenkern (1a..1d) nach einem der Ansprüche 1 bis 5, **dadurch gekennzeichnet, dass** die Gitterstruktur polygonförmige Waben umfasst.

7. Wabenkern (1a..1d) nach einem der Ansprüche 1 bis 6, **dadurch gekennzeichnet, dass** die Gitterstruktur gewellte Streifen umfasst.

8. Wabenkern (1a..1d) nach Anspruch 7, **dadurch gekennzeichnet, dass** die Gitterstruktur gewellte Streifen mit dazwischen angeordneten geraden Streifen umfasst.

9. Verbundplatte (3), umfassend eine Wabenkern (1a..1d) und damit verbundene Deckschichten (4, 5), **dadurch gekennzeichnet, dass** der Wabenkern (1a..1d) nach einem der Ansprüche 1 bis 8 ausgebildet ist.

10. Verwendung eines Wabenkerns (1a..1d) nach einem der Ansprüche 1 bis 8 oder einer Verbundplatte (3) nach Anspruch 9 im Kraftfahrzeugbau.

## Claims

1. Honeycomb core (1a..1d) with a grid structure, which consists of a plurality of grid elements (2a..2c) which are interconnected at junction points (K), **characterized in that**, at a number of points, a grid element (2a..2c) only loosely contacts an adjacent grid element (2a..2c) or a grid element (2a..2c) is interrupted, wherein a number of loose contact points or interruptions are two-dimensionally distributed irregularly over the grid structure in order to set the stiffness of the honeycomb core, so that zones of different stiffnesses are formed on the honeycomb core.

2. Honeycomb core (1a..1d) according to Claim 1, **characterized in that** it is formed in one piece.

3. Honeycomb core (1a..1d) according to Claim 1 or 2, **characterized by** at least one junction point (K) at which all the grid elements (2a..2c) that form this junction point (K) only loosely contact one another or a gap is provided between them.

4. Honeycomb core (1a..1d) according to one of Claims 1 to 3, **characterized in that** at least grid elements (2a..2c) running in parallel between two adjacent junction points (K) only loosely contact one another or a gap is provided between them.

5. Honeycomb core (1a..1d) according to one of Claims 1 to 4, **characterized in that** at least one loose contact point or gap is arranged within the grid structure.

6. Honeycomb core (1a..1d) according to one of Claims 1 to 5, **characterized in that** the grid structure comprises polygonal honeycombs.

7. Honeycomb core (1a..1d) according to one of Claims 1 to 6, **characterized in that** the grid structure comprises corrugated strips.

8. Honeycomb core (1a..1d) according to Claim 7, **characterized in that** the grid structure comprises corrugated strips with straight strips arranged in between.

9. Sandwich panel (3), comprising a honeycomb core (1a..1d) and outer layers (4, 5) bonded thereto, **characterized in that** the honeycomb core (1a..1d) is formed according to one of Claims 1 to 8.

10. Use of a honeycomb core (1a..1d) according to one of Claims 1 to 8 or of a sandwich panel (3) according to Claim 9 in motor vehicle construction.

## Revendications

1. Ame (1a...1d) en nid d'abeilles présentant une structure en grille constituée de plusieurs éléments (2a...2c) de grille reliés les uns aux autres en des emplacements de noeud (K),
**caractérisée en ce que**
en plusieurs emplacements, un élément (2a...2c) de grille ne touche que lâchement un élément (2a...2c) de grille voisin ou un élément de grille (2a...2c) est interrompu,
**en ce que** plusieurs emplacements de contact lâche ou interruptions sont répartis de manière irrégulière dans deux dimensions sur la structure de grille pour établir la rigidité de l'âme en nid d'abeilles de manière à former sur l'âme en nid d'abeilles des zones de rigidité différentes.

2. Ame (1a...1d) en nid d'abeilles selon la revendication 1, **caractérisée en ce qu'**elle est formée d'un seul tenant.

3. Ame (1a...1d) en nid d'abeilles selon les revendications 1 ou 2, **caractérisée par** au moins un emplacement de noeud (K) sur lequel tous les éléments de grille (2a...2c) qui forment cet emplacement de noeud (K) ne se touchent mutuellement que lâchement ou en ce qu'un interstice est prévu entre ces emplacements de grille.

4. Ame (1a...1d) en nid d'abeilles selon l'une des revendications 1 à 3, **caractérisée en ce qu'**au moins entre deux emplacements de noeuds (K) voisins, des éléments de grille (2a...2c) s'étendant en parallèle ne se touchent que lâchement ou **en ce qu'**un interstice est prévu entre ces éléments de grille.

5. Ame (1a...1d) en nid d'abeilles selon l'une des revendications 1 à 4, **caractérisée en ce qu'**au moins un emplacement de contact lâche ou interstice est disposé à l'intérieur de la structure en grille.

6. Ame (1a...1d) en nid d'abeilles selon l'une des revendications 1 à 5, **caractérisée en ce que** la structure en grille comporte un nid d'abeilles de forme polygonale.

7. Ame (1a...1d) en nid d'abeilles selon l'une des revendications 1 à 6, **caractérisée en ce que** la structure en grille comporte des rubans ondulés.

8. Ame (1a...1d) en nid d'abeilles selon l'une des revendications 7, **caractérisée en ce que** la structure en grille comporte des rubans ondulés entre lesquels sont disposés des rubans rectilignes.

9. Plaque composite (3) comprenant une âme (1a...1d) en nid d'abeilles auxquelles sont reliées des couches de recouvrement (4, 5), **caractérisée en ce que** l'âme (1a...1d) en nid d'abeilles est configurée selon l'une des revendications 1 à 8.

10. Utilisation d'une âme (1a...1d) en nid d'abeilles selon l'une des revendications 1 à 8 ou d'une plaque composite (3) selon la revendication 9 en construction de véhicules automobiles.
